# EUROPEAN PATENT SPECIFICATION

(11) **EP 4 467 858 B1**
(45) Date of publication and mention of the grant of the patent: **29.04.2026**
(21) Application number: 23175607.3
(22) Date of filing: 26.05.2023
(51) Int. Cl.: F16L 11/26, F16L 11/24, F16L 11/08

(54) **DUCT AND USES THEREOF**
KANAL UND VERWENDUNGEN DAVON
CONDUIT ET SES UTILISATIONS

(43) Date of publication of application: 27.11.2024
(73) Proprietor: DEC Technologies B.V., 7547 RD Enschede (NL)
(72) Inventor: DE GOEIJ, Theodorus Anthonius, 7547 RD Enschede (NL)
(74) Representative: van Dam, Vincent

(56) References cited:
- EP-B1- 0 076 540
- EP-B1- 1 495 855
- JP-A- 2010 164 286

## Description

The present invention relates to a duct and a method for producing said duct. The invention also relates to an air system comprising said duct. The invention also relates to the use of said ducts for noise mitigation or reduction, in particular in an air system.

Noises in ductwork can propagate throughout entire buildings. These noises are often caused by air or other gas or gas mixtures moving through ducts and may include banging, popping, humming and knocking sounds, which can be annoying.

In the field of ductwork, much effort is made to keep noise nuisance to a minimum. The reduction of noise levels may be expressed in terms of insertion loss and transmission loss.

Insertion loss can be defined as the reduction of noise level at a given location due to placement of a noise control device in the sound path between the sound source and that location.

Transmission loss is a measure of the airborne sound insulating properties, in a particular frequency band, of a material.

In acoustics, insertion loss and transmission loss are very similar, except that insertion loss refers to acoustic control in relation to a base system, for instance noise loss in a duct in relation to the source of the noise such as an air-conditioner, while transmission loss relates to sound traveling through a component, i.e. noise loss in the duct itself.

Various duct components that are designed to reduce noise nuisance are known. For instance, duct silencers are components ventilation systems used to reduce noise transmitted inside the ductwork. Such silencers are also referred to as sound attenuators, sound traps or mufflers. Silencers are usually based on diffusion to attenuate low noise frequencies and to provide broad band noise reduction, and/or on absorption of high frequency audible noise into a sound absorbing material.

The inventors consider that there is still room for improvement. With the present invention the inventors aim to provide a means for reducing noise nuisance in gas ducting systems, in particular air systems, which is easy to produce and implement in existing systems.

EP 0 076 540 B1 discloses a flexible hose for liquefied gases.

JP 2010 164286 A discloses a duct hose with flexibility and sound deadening performance.

EP 1 495 855 B1 discloses a method for removing a releasable inner layer from within a conduit.

### Description of the invention

The invention relates to a duct, comprising a cylindrical body comprising a wall of a polypropylene nonwoven fabric with one or more reinforcement element integrated therein and arranged in a coiled manner along the pitch of the duct, and wherein at least one airtight liner layer composed of monoaxially or biaxially oriented polypropylene or a combination thereof is arranged on the inner and/or outer surface of the nonwoven fabric.

The inventors have found that the combination of said polypropylene nonwoven fabric with said monoaxially or biaxially oriented polypropylene liner on one or both sides of the fabric confers acoustic advantages, in particular with respect to enhanced insertion loss and more in particular in respect of enhanced transmission loss. With respect to the latter the inventors have in particularly observed that high transmission loss is obtained in the lower frequency regions, which are notable for annoying humming sounds in air systems. In this respect, the present invention also relates to the use of the above defined duct in noise mitigation or reduction in ducting systems, in particular air systems, in particular for enhancing insertion and/or transmission loss in an air system.

The polypropylene material of the duct offers good resistance to non-oxidizing acids and bases, fatty agents and most organic solvents. It is also highly impermeable to water. The inventors observed in this respect that the material absorbs less than 0.01 % of its weigh in water. This makes polypropylene material ideal for total immersion applications.

The airtight liner layer composed of monoaxially or biaxially oriented polypropylene or a combination thereof is arranged as a film on the inner and/or outer surface of the nonwoven fabric. Mono axially oriented polypropylene (OPP) refers to oriented polypropylene. An OPP film is made of polypropylene material which is stretched in a transverse or longitudinal direction. On the other hand, biaxially oriented polypropylene (BOPP) refers to oriented polypropylene which is stretched in both the transverse as well as the longitudinal direction. The liner may be composed BOPP, OPP or a combination thereof. These materials provide a strong liner while flexibility of the wall is ensured. BOPP is preferred as material because it allows to produce a stronger and transparent liner.

By using the liner the nonwoven fabric is sealed in an airtight way to make the duct suitable for transporting gases, such as air. In this respect it is preferred that the nonwoven fabric is covered with said OPP or BOPP liner at least on the side that faces the inside of the duct, preferably that it forms the inner surface of the duct. A liner on the inside surface of the duct also prevents aggregation of dirt between the fibers of the nonwoven fabric so that unhindered gas transport is ensured.

Multiple liners may be used, either in subsequent layers or on both sides of the fabric. If multiple liners are used, they may be of the same material or of different material. For instance, a liner that faces the outside of the duct may have a different color than a liner on the inside of the duct, for instance for marking or recognizability purposes.

Liners on both sides of the fabric may facilitate production of a duct from the fabric, especially if both sides have a liner of the same material, because the orientation of the fabric will then be less relevant.

The one or more reinforcement element is integrated in the nonwoven fabric and arranged in a coiled manner along the pitch of the duct, so that a cylindrical duct shape is obtained. The material of the reinforcement element can be chosen among suitable materials that provide sufficient strength on one hand and sufficient flexibility on the other hand. Steel wire is a suitable material in this respect and can be commercially obtained in any suitable size. The reinforcement of a duct may consist of a single helical reinforcement or may comprise multiple reinforcement elements, for instance multiple helical elements arranged in a parallel manner with respect to each other.

The use of polypropylene nonwoven fabric with an OPP and/or BOPP liner allows the provision of flexible or semiflexible ducts. The air duct in this respect, may suitably be a flexible or semiflexible duct. The use of a helical reinforcement element provides strength, in the sense that the duct is bendable but not compressible in cross-sectional direction. On the other hand, the helical reinforcement allows compressing the duct in longitudinal direction, especially since the wall material of nonwoven polypropylene and liner(s) is flexible. This feature may be used to save space during transport and storage.

In one embodiment said one or more reinforcement element is arranged as a coiled compression spring. By designing the helical reinforcement with a spring function the duct can be stored and transported in a compact manner and due to the self-stretching characteristics conferred by the spring coil reinforcement energy is saved when the ducts are decompressed in longitudinal direction.

By adding a spring effect to the coil, the inner side of the tube also gives less gas resistance (which is energy saving) during use of the duct in particular because transport of the gases is associated with less resistance.

The reinforcement, such as a steel wire, may be coated with a coating which forms a sealed construction with the overlapping layers, for instance a heat seal coating or adhesive seal coating. This makes the inner surface of the duct smoother and thus reduces gas resistance, and improves negative pressure resistance of the wall. It also improves "spring properties" in case the reinforcement is configured as a spring coil.

The liner can be coated onto the nonwoven fabric by any suitable manner, for instance by applying a coating in liquid form followed by curing or by fixing a solid liner film to the nonwoven material by any suitable method, including but not limited to gluing, welding or melting.

In a preferred embodiment the wall of nonwoven fabric is formed of strips of said fabric arranged along the pitch of the duct in a helical manner. It is even more preferred that these strips are precoated with said liner.

Sheets of nonwoven propylene with a BOPP and/or OPP liner on one or both sides of any size can be prepared this way and subsequently cut to size and be used to manufacture the duct according to the invention.

The coiled reinforcement may for instance be obtained by winding the reinforcement element(s) (such as a steel wire) around a mold of cylindrical shape.

It is preferred that the coiled reinforcement element(s) is or are sandwiched in said fabric by enclosing it between two layers of fabric. These two layers may be attached to each other by any suitable means, including melting, gluing, welding etc.

With regard to manufacturing such a duct, the invention also relates to a method comprising providing a reinforcement element sandwiched between at least two layers of nonwoven polypropylene fabric provided on at least one side with a liner of monoaxially or biaxially oriented polypropylene or a combination thereof; winding said sandwiched reinforcement element in a helical manner along a pitch to obtain a coiled reinforcement; and interconnecting subsequent windings of said coiled reinforcement to provide a duct with an airtight wall. This sandwiched reinforcement can be wound along the desired pitch and subsequent windings may be interconnected to each other by any suitable means, such as melting, gluing, welding etc., to provide an airtight duct.

In a preferred embodiment the wall of the duct comprises alternating areas of coiled non-reinforced strips of liner coated nonwoven fabric and areas of coiled reinforced strips of liner coated nonwoven fabric. In view of this the method for manufacturing the duct may, in one embodiment thereof, comprise the provision of a reinforcement element sandwiched between at least two layers of nonwoven polypropylene coated with one or more BOPP and/or OPP liner film; winding said sandwiched reinforcement element in a helical manner along a pitch to obtain a coiled reinforcement; and interconnecting subsequent windings of said coiled reinforcement by means of one or more further strip of said nonwoven polypropylene coated with said one or more BOPP and/or OPP liner film provide a duct with an airtight wall. Said one or more further strip, with no reinforcement, may be wound in the same manner as the reinforced strips, between subsequent windings of the coiled reinforcement, and interconnected as described above to provide an airtight duct wall. Preferably said one or more further strip is a single strip of said liner coated nonwoven polypropylene.

In a preferred embodiment the wall of nonwoven fabric comprises alternating coiled areas of a single layer of liner coated nonwoven fabric and coiled areas of two layers of nonwoven fabric between which said reinforcement element is sandwiched or embedded. Such a duct may be produced in accordance with the method of the present invention by first providing a reinforcement element sandwiched between two layers of nonwoven polypropylene coated with one or more BOPP and/or OPP liner film; winding said sandwiched reinforcement element in a helical manner along a pitch to obtain a coiled reinforcement; and interconnecting subsequent windings of said coiled reinforcement by means of a single strip of said nonwoven polypropylene coated with said one or more BOPP and/or OPP liner film provide a duct with an airtight wall. Interconnection and fixation may be performed as described above to provide an airtight duct wall.

The inventors have found that by using coiled areas of a single layer of OPP and/or BOPP liner coated nonwoven polypropylene alternated with the reinforcement elements sandwiched between two OPP and/or BOPP liner coated nonwoven polypropylene, compressibility of the duct in longitudinal direction is facilitated, which is advantageous in the sense of transport and storage. In this sense it may me preferred that the method comprises providing a reinforcement element sandwiched between two layers of nonwoven polypropylene provided with said liner; winding said sandwiched reinforcement element in a helical manner along a pitch to obtain a coiled reinforcement; and interconnecting subsequent windings of said coiled reinforcement by means of a single strip of said nonwoven polypropylene provided with said liner to provide a duct with an airtight wall. Alternatively, subsequent windings of said coiled reinforcement may be interconnected directly with each other to provide a duct with an airtight wall.

Subsequent windings of strips preferably overlap to a certain extent to facilitate the provision of an airtight connection between subsequent windings. For instance, the strip of a first winding may be covered for about one half by the strip of a previous winding and for about the other half by a strip of a subsequent winding, so that the surface of the first winding that is overlapped is essentially hidden by the overlapping strips.

Fixation of strips of subsequent windings to each other to provide airtight contact or overlap zones may take place by any suitable means, such as melting, gluing, welding etc., to provide an airtight duct.

The duct according to the invention may be provided with a functional agent or coating. In one embodiment for instance, the nonwoven fabric and/or liner contain an antimicrobial agent. Such an antimicrobial agent may for instance be based on a coating of salt (NaCl) crystals. By using these salts also any electrical voltage that may build up at the inner surface of the duct by the friction of gases or possible dust particles may be discharged to an earthing point, without any adverse effects on the durability and flexibility of the duct. Salt crystals are preferred because these adhere well to the liner surface, and are heat and aging resistant. Such a coating is preferably applied to the OPP/BOPP liner facing the inside of the duct, preferably already on a sheet of this material that may later be sized to strips to provide the duct in accordance with the manufacturing method specified above. This is in particular in view of the fact that some microbes are able to degrade polypropylene. Application of such salts may be performed from an ionic solution on the basis of ethanol or similar volatile liquids which evaporate rapidly. The solution may be applied by any suitable means, including spraying, raking, lick rolling, etc. to ensure a uniform distribution. Due to the uniform distribution microbes cannot grow between the crystals and also cannot use the polypropylene as nutrient source. The inner surface of the duct is kept substantially germ free.

Alternatively or in addition, the nonwoven fabric may be impregnated with carbon particles. This way the duct can be statically discharged. Without impregnation with carbon particles the duct may function as an electrical isolator. For instance, if the inner surface of the duct is formed by a nonwoven polypropylene material impregnated with carbon particles and the outer surface is an OPP and/or BOPP liner layer, the inner surface my discharge static charges via the wall to an earthing point. This renders the duct suitable as ATEX certified product in hazardous areas in industry and laboratory environments. Normally, impregnation with carbon particles would render a material brittle with limited lifetime. This is not the case with the present polypropylene nonwoven, because this material maintains its flexibility after impregnation with carbon particles and a long lifetime is ensured.

Alternatively or in addition, the nonwoven fabric and/or liner may contain a fire retardant. In this case it is preferred to subject the nonwoven fabric to a treatment with a fire retardant. Alternatively, or in addition the propylene fibers of the nonwoven, which are normally hydrophobic, may be made hydrophilic so that moist uptake may take place between the fibers, which has a fire retarding effect in itself. The latter embodiment will only be preferred in case only an OPP/BOPP liner on the inner surface of the duct is provided.

Apart from the polypropylene nonwoven fabric with said one or more reinforcement element integrated therein and said at least one airtight liner layer composed of monoaxially or biaxially oriented polypropylene or a combination thereof, the duct may contain further layers, in particular on the outer side of the duct. For instance, for further improvement of thermic or acoustic characteristics the duct according to the invention may further comprise an insulation layer on the outer surface of the wall, and/or an outer jacket. In accordance the manufacturing method described herein may contain additional steps of providing an insulation layer and/or an outer jacket on the outer surface of the duct wall.

The duct of the invention may in principle be used in any systems for transporting gas or gas mixtures. However, in a preferred embodiment it is applied in air systems. In this regard the invention also relates to an air system comprising the air duct according to the invention. The air system in the context of this invention may be a system in a building or means of transport. Such means of transport include cars, planes, boats, trucks etc. Without limitation the air system may be an air cleaning system, heating system, refrigeration system or air conditioning system.

### Exemplary embodiment

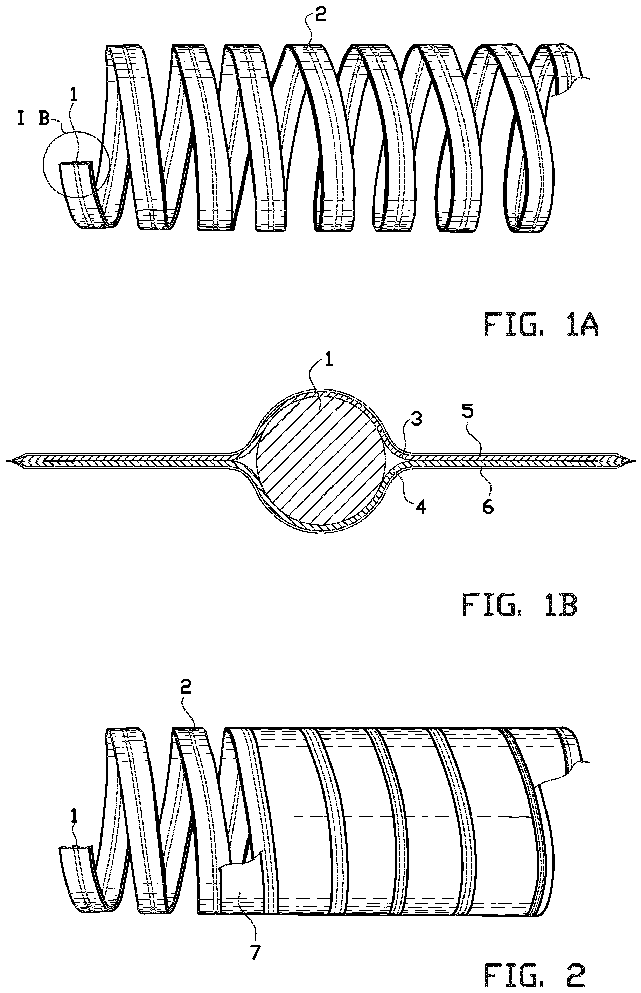

Fig. 1 and Fig. 2 show a schematic representation of the construction of a part of an exemplary embodiment of a duct according to the invention. Fig. 1A shows a first coiled strip 2 which is constructed of a reinforcement element 1 (for instance a steel wire) sandwiched between two layers of fabric. The coiled strip 2 may for instance be obtained by winding the sandwiched reinforcement element around a mold of cylindrical shape.

As shown in the cross-sectional view of Fig. 1B these two layers 3, 4 are attached to each other. This can take place by any suitable means, including melting, gluing, welding etc.

As further shown in Fig.1 B the nonwoven fabric layers are coated on both outer surfaces with a BOPP or OPP liner 5, 6.

In this preferred embodiment the wall of the duct is designed to have alternating coiled areas of a single layer of liner coated nonwoven fabric without reinforcement and coiled areas of two layers of nonwoven fabric between which said reinforcement element is sandwiched. In the present embodiment this duct is produced by winding said sandwiched reinforcement element 1 in a helical manner along a pitch to obtain a coiled reinforcement strip 2; and interconnecting subsequent windings of said sandwiched coiled reinforcement strip 2 by means of a further single strip 7 without reinforcement and made of said nonwoven polypropylene coated with said one or more BOPP and/or OPP liner film, to provide a duct with an airtight wall. As shown in Fig. 2 said further strip 7 is wound in the same manner as the reinforced strip 2, between subsequent windings thereof. As shown in Fig. 2 subsequent strips 2, 7 overlap to a certain extent to facilitate the provision of an airtight connection between subsequent windings by means of any suitable means, including melting, gluing, welding etc. This results in an airtight duct wall.

It is also possible that that subsequent windings of coiled strip 2 are connected directly to each other (not shown) to form an airtight connection. In this case said further strip 7 would not be necessary.

## Claims

1. Duct, comprising a cylindrical body comprising a wall of a polypropylene nonwoven fabric **characterized in that** said polypropylene nonwoven fabric comprises one or more reinforcement element (1) integrated therein and arranged in a coiled manner along the pitch of the duct, and wherein at least one airtight liner layer (5, 6) composed of monoaxially or biaxially oriented polypropylene or a combination thereof is arranged on the inner and/or outer surface of the nonwoven fabric.

2. Duct according to claim 1, wherein the nonwoven fabric and/or liner contain an antimicrobial agent,
preferably wherein a said airtight liner (5, 6) faces the inner surface of the duct and contains said antimicrobial agent,
preferably wherein the antimicrobial agent is based on a coating of salt crystals.

3. Duct according to any of the previous claims, wherein the nonwoven fabric is impregnated with carbon particles.

4. Duct according to any of the previous claims, wherein the nonwoven fabric and/or liner (5, 6) contain a fire retardant.

5. Duct according to any of the previous claims, wherein said one or more reinforcement element (1) is arranged as a coiled compression spring.

6. Duct according to any of the previous claims, wherein the wall of nonwoven fabric is formed of strips (2, 7) of said fabric wrapped along the pitch of the duct in a helical manner.

7. Duct according to claim 6, wherein said strips (2, 7) of said fabric are strips precoated with said liner (5, 6).

8. Duct according to any of the previous claims wherein the duct wall comprises alternating coiled areas of a single layer of liner coated nonwoven fabric and coiled areas of two layers (3, 4) of nonwoven fabric between which said reinforcement element (1) is sandwiched.

9. Duct according to any of the previous claims, further comprising an insulation layer on the outer surface of the wall, and/or an outer jacket.

10. Method for producing the duct according to any of the previous claims, comprising
providing a reinforcement element (1) sandwiched between at least two layers (3, 4) of nonwoven polypropylene fabric provided on at least one side with a liner (5, 6) of monoaxially or biaxially oriented polypropylene or a combination thereof;
winding said sandwiched reinforcement element in a helical manner along a pitch to obtain a coiled reinforcement; and
interconnecting subsequent windings of said coiled reinforcement to provide a duct with an airtight wall.

11. Method according to claim 10, comprising
providing a reinforcement element (1) sandwiched between two layers (3, 4) of nonwoven polypropylene provided with said liner (5, 6);
winding said sandwiched reinforcement element in a helical manner along a pitch to obtain a coiled reinforcement; and
interconnecting subsequent windings of said coiled reinforcement by means of a single strip (7) of said nonwoven polypropylene provided with said liner to provide a duct with an airtight wall.

12. Method according to claim 10, comprising
providing a reinforcement element (1) sandwiched between two layers (3, 4) of nonwoven polypropylene provided with said liner (5, 6);
winding said sandwiched reinforcement element (1) in a helical manner along a pitch to obtain a coiled reinforcement; and
interconnecting subsequent windings of said coiled reinforcement directly with each other to provide a duct with an airtight wall.

13. Method according to any of the claims 10 to 12, wherein an insulation layer and/or an outer jacket is provided on the outer surface of said wall.

14. Air system comprising the air duct according to any of the claims 1 to 9, preferably wherein the air system is an air cleaning system, heating system, refrigeration system or air conditioning system.

15. Use of the duct according to any of the claims 1 to 9 for noise reduction or mitigation in an air system, preferably for enhancement of insertion and/or transmission loss in an air system.

## Patentansprüche

1. Kanal, umfassend einen zylindrischen Körper, umfassend eine Wand aus einem Polypropylen-Vliesstoff, **dadurch gekennzeichnet, dass** der Polypropylen-Vliesstoff ein oder mehr Verstärkungselemente (1) umfasst, die darin integriert und in einer gewundenen Weise entlang der Steigung des Kanals angeordnet sind, und wobei mindestens eine luftundurchlässige Liner-Schicht (5, 6), die aus monoaxial oder biaxial orientiertem Polypropylen oder einer Kombination davon besteht, auf der Innen- und/oder Außenfläche des Vliesstoffs angeordnet ist.

2. Kanal nach Anspruch 1, wobei der Vliesstoff und/oder der Liner einen antimikrobiellen Wirkstoff enthält,
vorzugsweise wobei der luftundurchlässige Liner (5, 6) der Innenfläche des Kanals zugewandt ist und den antimikrobiellen Wirkstoff enthält,
vorzugsweise wobei der antimikrobielle Wirkstoff auf einer Beschichtung aus Salzkristallen basiert.

3. Kanal nach einem der vorhergehenden Ansprüche, wobei der Vliesstoff mit Kohlenstoffpartikeln imprägniert ist.

4. Kanal nach einem der vorhergehenden Ansprüche, wobei der Vliesstoff und/oder der Liner (5, 6) einen Flammschutzmittel enthält.

5. Kanal nach einem der vorhergehenden Ansprüche, wobei das eine oder die mehreren Verstärkungselemente (1) wie eine gewundene Druckfeder angeordnet sind.

6. Kanal nach einem der vorhergehenden Ansprüche, wobei die Wand aus Vliesstoff aus Streifen (2, 7) des Vliesstoffs ausgebildet ist, die spiralförmig entlang der Steigung des Kanals gewickelt sind.

7. Kanal nach Anspruch 6, wobei die Streifen (2, 7) des Vliesstoffs Streifen sind, die mit dem Liner (5, 6) vorbeschichtet sind.

8. Kanal nach einem der vorhergehenden Ansprüche, wobei die Kanalwand abwechselnde gewundene Bereiche einer einzigen Schicht aus mit Liner beschichtetem Vliesstoff und gewundene Bereiche von zwei Schichten (3, 4) aus Vliesstoff, zwischen die das Verstärkungselement (1) sandwichartig eingefügt ist, umfasst.

9. Kanal nach einem der vorhergehenden Ansprüche, ferner umfassend eine Isolierschicht auf der Außenfläche der Wand und/oder einen Außenmantel.

10. Verfahren zum Herstellen des Kanals nach einem der vorhergehenden Ansprüche, umfassend
Bereitstellen eines Verstärkungselements (1), das zwischen mindestens zwei Schichten (3, 4) aus Polypropylen-Vliesstoff sandwichartig eingefügt ist, der auf mindestens einer Seite mit einem Liner (5, 6) aus monoaxial oder biaxial orientiertem Polypropylen oder einer Kombination davon versehen ist;
Winden des sandwichartig eingefügten Verstärkungselements in spiralförmiger Weise entlang einer Steigung, um eine gewundene Verstärkung zu erhalten; und
Verbinden aufeinanderfolgender Windungen der gewundenen Verstärkung, um einen Kanal mit einer luftundurchlässigen Wand bereitzustellen.

11. Verfahren nach Anspruch 10, umfassend Bereitstellen eines Verstärkungselements (1), das sandwichartig zwischen zwei Schichten (3, 4) aus Polypropylen-Vliesstoff eingefügt ist, der mit dem Liner (5, 6) versehen ist;
Winden des sandwichartig eingefügten Verstärkungselements in spiralförmiger Weise entlang einer Steigung, um eine gewundene Verstärkung zu erhalten; und
Verbinden aufeinanderfolgender Windungen der gewundenen Verstärkung mithilfe eines einzigen Streifens (7) aus dem mit dem Liner versehenen Polypropylen-Vliesstoff, um einen Kanal mit einer luftundurchlässigen Wand bereitzustellen.

12. Verfahren nach Anspruch 10, umfassend
Bereitstellen eines Verstärkungselements (1), das sandwichartig zwischen zwei Schichten (3, 4) aus Polypropylen-Vliesstoff eingefügt ist, der mit dem Liner (5, 6) versehen ist;
Winden des sandwichartig eingefügten Verstärkungselements (1) in spiralförmiger Weise entlang einer Steigung, um eine gewundene Verstärkung zu erhalten; und
Verbinden aufeinanderfolgender Windungen der gewundenen Verstärkung direkt miteinander, um einen Kanal mit einer luftundurchlässigen Wand bereitzustellen.

13. Verfahren nach einem der Ansprüche 10 bis 12, wobei eine Isolierschicht und/oder ein Außenmantel auf der Außenfläche der Wand vorgesehen ist.

14. Luftsystem, das den Luftkanal nach einem der Ansprüche 1 bis 9 umfasst, vorzugsweise wobei das Luftsystem ein Luftreinigungssystem, Heizsystem, Kühlsystem oder Klimatisierungssystem ist.

15. Verwendung des Kanals nach einem der Ansprüche 1 bis 9 zur Geräuschreduzierung oder -minderung in einem Luftsystem, vorzugsweise zum Verbessern der Einfügedämpfung und/oder Durchlassdämpfung in einem Luftsystem.

## Revendications

1. Conduit, comprenant un corps cylindrique comprenant une paroi d'un tissu non tissé en polypropylène **caractérisé en ce que** ledit tissu non tissé en polypropylène comprend un ou plusieurs éléments de renfort (1) intégrés en son sein et agencés de manière spiralée le long du pas du conduit, et dans lequel au moins une couche de revêtement intérieur (5, 6) étanche à l'air constituée de polypropylène orienté de façon monoaxiale ou biaxiale ou d'une combinaison de ceux-ci est agencée sur la surface intérieure et/ou extérieure du tissu non tissé.

2. Conduit selon la revendication 1, dans lequel le tissu non tissé et/ou le revêtement intérieur contient un agent antimicrobien,
de préférence dans lequel un dit revêtement intérieur (5, 6) étanche à l'air est tourné vers la surface intérieure du conduit et contient ledit agent antimicrobien,
dans préférence dans lequel l'agent antimicrobien est enduit sur un revêtement extérieur en cristaux de sel.

3. Conduit selon l'une quelconque des revendications précédentes, dans lequel le tissu non tissé est imprégné de particules de carbone.

4. Conduit selon l'une quelconque des revendications précédentes, dans lequel le tissu non tissé et/ou le revêtement intérieur (5, 6) contient un produit ignifuge.

5. Conduit selon l'une quelconque des revendications précédentes, dans lequel ledit ou lesdits éléments de renfort (1) sont agencés sous forme de ressort de compression spiralé.

6. Conduit selon l'une quelconque des revendications précédentes, dans lequel la paroi en tissu non tissé est constituée de bandes (2, 7) dudit tissu enroulé le long du pas du conduit de façon hélicoïdale.

7. Conduit selon la revendication 6, dans lequel lesdites bandes (2, 7) dudit tissu sont des bandes préenduites avec ledit revêtement intérieur (5, 6).

8. Conduit selon l'une quelconque des revendications précédentes, dans lequel la paroi du conduit comprend une alternance de surfaces spiralées d'une seule couche de tissu non tissé enduit avec le revêtement intérieur et de surfaces spiralées de deux couches (3, 4) de tissu non tissé entre lesquelles ledit élément de renfort (1) est intercalé.

9. Conduit selon l'une quelconque des revendications précédentes, comprenant en outre une couche isolante sur la surface extérieure de la paroi, et/ou une chemise extérieure.

10. Procédé pour produire le conduit selon l'une quelconque des revendications précédentes, comprenant
la fourniture d'un élément de renfort (1) intercalé entre au moins deux couches (3, 4) de tissu non tissé en polypropylène enduit sur au moins un côté d'un revêtement intérieur (5, 6) en polypropylène orienté de façon monoaxiale ou biaxiale ou d'une combinaison de ceux-ci ;
l'enroulement de manière hélicoïdale dudit élément de renfort intercalé le long d'un pas pour obtenir un renfort spiralé ; et
l'interconnexion des enroulements ultérieurs dudit renfort spiralé pour fournir un conduit muni d'une paroi étanche à l'air.

11. Procédé selon la revendication 10, comprenant
la fourniture d'un élément de renfort (1) intercalé entre au moins deux couches (3, 4) de tissu non tissé en polypropylène enduit avec ledit revêtement intérieur (5, 6) ;
l'enroulement de manière hélicoïdale dudit élément de renfort intercalé le long d'un pas pour obtenir un renfort spiralé ; et
l'interconnexion des enroulements ultérieurs dudit renfort spiralé au moyen d'une seule bande (7) dudit tissu non tissé en polypropylène enduit avec ledit revêtement intérieur pour fournir un conduit muni d'une paroi étanche à l'air.

12. Procédé selon la revendication 10, comprenant
la fourniture d'un élément de renfort (1) intercalé entre au moins deux couches (3, 4) de tissu non tissé en polypropylène enduit avec ledit revêtement intérieur (5, 6) ;
l'enroulement de manière hélicoïdale dudit élément de renfort (1) intercalé le long d'un pas pour obtenir un renfort spiralé ; et
l'interconnexion des enroulements ultérieurs dudit renfort spiralé directement entre eux pour fournir un conduit muni d'une paroi étanche à l'air.

13. Procédé selon l'une quelconque des revendications 10 à 12, dans lequel une couche isolante et/ou une chemise extérieure est disposée sur la surface extérieure de ladite paroi.

14. Système pneumatique comprenant le conduit d'air selon l'une quelconque des revendications 1 à 9, de préférence dans lequel le système pneumatique est un système pneumatique de nettoyage, de chauffage, de réfrigération ou de climatisation.

15. Utilisation du conduit selon l'une quelconque des revendications 1 à 9 pour la réduction ou l'atténuation du bruit dans un système pneumatique, de préférence pour améliorer la perte par insertion et/ou transmission dans un système pneumatique.
